Europäisches Patentamt

(19) **European Patent Office**

**Office européen des brevets**

(11) Numéro de publication: **0 004 502**
**B1**

(12) **FASCICULE DE BREVET EUROPEEN**

(45) Date de publication du fascicule du brevet: **06.01.82**

(51) Int. Cl.³: **B 65 B 37/00, A 22 C 11/00**

(21) Numéro de dépôt: **79400168.5**

(22) Date de dépôt: **14.03.79**

(54) Dispositif de fabrication de produits fourrés tels que des saucisses et saucissons.

(30) Priorité: **17.03.78 FR 7807863**
**28.02.79 FR 7905223**

(43) Date de publication de la demande:
**03.10.79 Bulletin 79/20**

(45) Mention de la délivrance du brevet:
**06.01.82 Bulletin 82/1**

(84) Etats contractants de5signe5s:
**BE CH DE GB IT LU NL SE**

(56) Documents cités:
**FR - A - 1 193 976**
**FR - A - 2 165 312**
**US - A - 2 568 491**
**US - A - 3 499 766**
**US - A - 3 959 503**

(73) Titulaire: **Saurin, William**
**81 à 89, Avenue du Général Leclerc**
**Saint-Thibault F-77400 Lagny (FR)**

(72) Inventeur: **Ayroulet, Michel Henri Louis**
**3, Square Alliendé**
**F-94600 Choisy-Le-Roi (FR)**

(74) Mandataire: **Weinstein, Zinovi et al,**
**31, Cuvillierstrasse**
**D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Dispositif de fabrication de produits fourrés tels que des saucisses et saucissons

L'invention concerne généralement un dispositif de fabrication de produits fourrés tels que des saucisses, saucissions et produits analogues, à base de viandes, de poissons ou d'autres produits alimentaires.

On connaît déjà dans la technique des dispositifs de fabrication de saucisses ayant deux parties cylindriques coaxiales de natures différentes, ledit dispositif comprenant des bacs formant réserve de pâte externe et de pâte interne, reliés par des pompes doseuses et des vannes à des canules d'extrusion coaxiales, à savoir une canule interne et une canule externe, comme décrit par exemple dans le brevet américain n° 2.568.491.

De tels dispositifs comprennent également des moyens pour amener un boyau synthétique plissé autour de l'extrémité de la canule externe de façon à enrober les deux parties de la saucisse lors de l'extrusion.

Comme décrit par exemple dans le brevet américain n° 3.959.503, on connaît par ailleurs des moyens pour fractionner des saucisses en éléments de longueur prédéterminée sensiblement fermés à leurs extrémités, alors que des moyens connus de traitement sont ensuite utilisés pour coaguler les protéines contenues dans ces éléments et des moyens de pelage sont prévus pour peler les saucisses ou saucissons obtenus pour éliminer le boyau extérieur.

Dans les dispositifs d'extrusion de l'art antérieur, il se produit parfois un bourrage ou une obstruction de la pâte formant la partie externe des produits fourrés, empêchant ainsi un fonctionnement normal du dispositif de fabrication des saucisses ou saucissons.

La présente invention a pour objet de remédier à cet inconvénient de la" technique antérieure et elle propose un dispositif de fabrication de produits fourrés tels que des saucisses, saucissons ou analogues, comprenant des bacs formant réserve de pâte externe et de pâte interne, reliés par des pompes doseuses et des vannes à des canules d'extrusion coaxiales, caractérisé en ce que la canule interne est supportée et centrée à l'intérieur de la canule externe par des moyens tels que la section libre du passage de la canule externe autour de la canule interne reste constante dans les zones de support et de centrage de la canule interne.

On évite ainsi tout risque de bourrage et toute obstruction lors de l'extrusion comme expliqué précédemment.

L'invention sera mieux comprise et d'autres buts, caractéristiques, détails et avantages de celle-ci apparaîtront plus clairement au cours de la description explicative qui va suivre faite en référence aux dessins schématiques annexés, donnés uniquement à titre d'exemple illustrant un mode de réalisation de l'invention et dans lesquels:

La figure 1 représente schématiquement un dispositif de fabrication de produits fourrés selon l'invention.

La figure 2 est une vue partielle en coupe longitudinale des canules externe et interne d'extrusion des pâtes externe et interne des produits fourrés, et

La figure 3 est une vue agrandie en coupe transversale selon la ligne III—III de la figure 2.

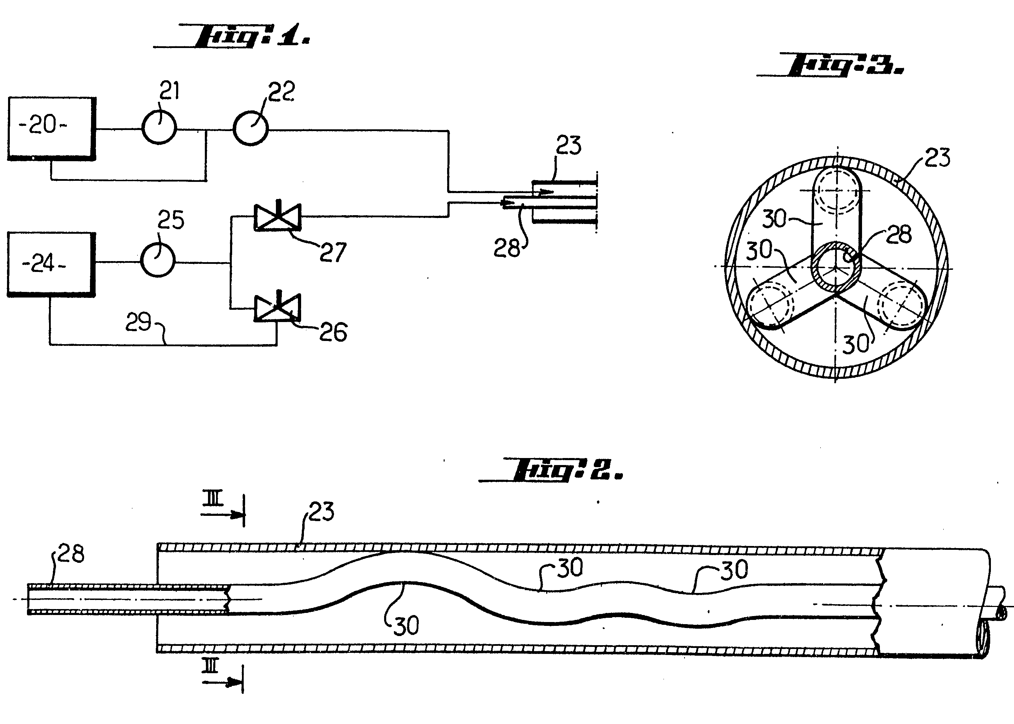

Dans les figures 1 à 3, on a donc représenté schématiquement un dispositif de fabrication de produits fourrés, comprenant des perfectionnements intéressants.

Dans ces figures, la référence 20 désigne un bac tampon contenant une pâte destinée à former la partie cylindrique externe du produit, par exemple de la chair à saucisse. Une pompe 21 de poussage à débit constant, par exemple une pompe à engrenage, permet de diriger cette pâte vers une canule externe d'extrusion 23. Une seconde pompe à engrenage 22, débrayable, suit la première pompe 21 pour limiter et régulariser le débit de celle-ci et permet donc un dosage de la pâte destinée à former la partie externe du produit. Un conduit de retour vers le bac tampon 20 est prévu entre les pompes 21 et 22. Un second bac tampon 24 est destiné à contenir la pâte formant le noyau interne du produit, et est suivi d'une pompe de poussage 25 à débit réglable, par exemple une pompe à engrenage, qui envoie la pâte vers deux vannes 26 et 27 prévues en parallèle, par exemple du type à commande électrique ou pneumatique. La sortie de la première vanne 26 est reliée au bac tampon 24 par une canule de retour 29 permettant de ramener la pâte dans le bac 24. La sortie de la vanne 27 est reliée à une canule interne d'extrusion 28. Les circuits sont conçus de telle façon que les pertes de charge dans le circuit de recyclage 25—26—29 sont sensiblement les mêmes que celles dans le circuit de poussage 25—27—28. Le réglage de la pompe 25 permet de doser la proportion de pâte destinée à former le noyau interne que l'on désire avoir dans le produit final.

Le dispositif comprend encore des moyens pour amener un boyau plissé autour de la canule externe 23, moyens qui n'ont pas été représentés ici.

Selon l'invention, la canule interne 28 est maintenue et centrée à l'intérieur de la canule externe 23 de façon telle que la section transversale de passage de la pâte provenant du bac 20, et passant das la canule externe 23 autour de la canule interne 28, ne soit réduite en aucun point à l'intérieur de cette canule externe 23, et ceci afin d'éviter tout risque de bourrage ou d'obstruction.

Pour cela, la canule interne 28 présente un certain nombre de coudes 30, au nombre de trois dans l'exemple représenté, qui sont axialement espacés et qui sont angulairement écartés les uns des autres, par exemple à 120° comme on le voit en figure 3. Ces coudes ont un rayon de courbure tel que leur diamètre externe, par rapport à l'axe longitudinal de la canule externe 23, est sensiblement égal au diamètre interne de celle canule 23. De cette façon, les parties radialement les plus extérieures des coudes sont appuyées sur la paroi interne de la canule externe 23, et permettent ainsi de centrer la canule interne 28 à l'intérieur de la canule externe 23, et de la maintenir transversalement en position.

Grâce aux trois coudes 30 formés par la canule interne 28, on obtient ainsi un centrage parfait de cette canule interne dans la canule externe 23, sans utilisation d'autre moyen; la canule 23 pourrait aussi comprendre deux coudes diamétralement opposés.

On comprend également que, de cette façon, la section de passage de la pâte provenant du bac 20 dans la canule externe 23 est constante, en tout point de cette canule.

Bien entendu, l'invention n'est nullement limitée au mode de réalisation décrit et représenté qui n'a été donné qu'à titre d'exemple. En particulier, elle comprend tous les moyens constituant des équivalents techniques des moyens décrits ainsi que leurs combinaisons, si celles-ci sont exécutées suivant son esprit et mises en oeuvre dans le cadre des revendications qui suivent.

## Revendications

1. Dispositif de fabrication de produits fourrés tels que des saucisses, saucissons et produits analogues, à base de viandes, poissons ou autres produits alimentaires, du type comprenant des bacs (20, 24) formant réserve de pâte externe et de pâte interne, reliés par des pompes doseuses (22, 25) et des vannes (26, 27) à des canules d'extrusion coaxiales (23, 28), caractérisé en ce que la canule interne (28) est supportée et centrée à l'intérieur de la canule externe (23) par des moyens tels que la section libre de passage de la canule externe autour de la canule interne reste constante dans les zones de support et de centrage de la canule interne.

2. Dispositif selon la revendication 1, caractérisé en ce que la canule interne comprend au moins deux coudes (30), axialement espacés et angulairement écartés l'un de l'autre, destinés à être appuyés sur la paroi interne de la canule externe pour centrer la canule interne et la bloquer transversalement.

3. Dispositif selon la revendication 2, caractérisé en ce que la canule interne comprend trois coudes précités écartés angulairement de 120° les uns par rapport aux autres.

4. Dispositif selon l'une des revendications précédentes, caractérisé en ce qu'il comprend des moyens de dosage de la pâte interne, par recyclage vers le bac (20) du produit dans un circuit de retour (25, 26, 29) présentant les mêmes pertes de charge que le circuit d'amenée (25, 27, 28) vers la canule d'extrusion.

## Claims

1. A device for making stuffed products such as fresh sausages, dry sausages and like sausage products based on meats, fishes and other food products, of the type comprising tanks 20, 24 constituting outer pasty material and inner pasty material reserve means interconnected by proportioning pumps 22, 25 and valves 26, 27 to co-axial extrusion cannulas 23, 28, characterized in that the inner cannula 28 is supported and centered within the inner cannula 23 by such means that the free flow section of the outer cannula around the inner cannula remains constant in the inner cannula support and centering regions.

2. A device according to claim 1, characterized in that the inner cannula comprises at least two elbows or bends 30 axially spaced and angularly apart from one another, intended to bear upon the inner wall of the outer cannula so as to center and transversely lock the inner cannula.

3. A device according to claim 2, characterized in that the inner cannula comprises three aforesaid elbows or bends angularly spaced by 120° from one another.

4. A device according to one of the foregoing claims, characterized in that it comprises means for proportioning the inner pasty material by recycling the product towards the tank 20 through a return circuit 25, 26, 29 in which the pressure losses are the same as in the extrusion cannula supply circuit 25, 27, 28.

## Patentansprüche

1. Vorrichtung zur Herstellung von gefüllten Waren, wie z.B. Wurstwaren, Würste oder dergleichen auf Basis von Fleisch, Fisch oder ähnlichen Lebensmitteln, mit Behältern (20, 24) als Reserve für die äussere Paste und die innere Füllung, welche über Dosierpumpen (22, 25) und Schiebern (26, 27) mit koaxialen Extrudierdüsen (23, 28) verbunden sind, dadurch gekennzeichnet, dass sie innere Düse (28) im Inneren der äusseren Düse (23) mit Hilfe von solchen Mitteln zentriert gehalten ist, dass der freie Durchtrittsquerschnitt der äusseren Düse um die innere Düse in den Stütz- und Zentrierbereichen der inneren Düse konstant gehalten ist.

2. Vorrichtung nach Anspruch 1, dadurch gekennzeichnet, dass die innere Düse mindestens zwei Bögen (30) bildet, die axial und winkelmässig im Abstand von einander liegen und dazu dienen, auf die innere Wandung der äusseren Düse abgestützt zu werden, damit die innere Düse zentriert und in Querrichtung festgehalten wird.

3. Vorrichtung nach Anspruch 2, dadurch gekennzeichnet, dass die innere Düse mit drei Bögen versehen ist, welche im Bezug auf einander um 120° versetzt angeordnet sind.

4. Vorrichtung nach einem der vorangehenden Ansprüchen, dadurch gekennzeichnet, dass sie mit Mitteln zur Dosierung der inneren Füllung versehen ist, welche so betrieben werden, dass diese Füllung über einen Rücklaufkreis (25, 26, 29), welcher die gleichen Ladeverluste wie der Zufuhrkreis (25, 27, 28) zu der Extrudierdüse aufweist, zu dem Behälter (20) zurückgeführt wird.

Fig.1.

Fig.2.

Fig.3.